(19) Europäisches Patentamt
European Patent Office
Office européen des brevets

(11) **EP 1 244 307 B1**

(12) **EUROPEAN PATENT SPECIFICATION**

(45) Date of publication and mention
of the grant of the patent:
**11.07.2018 Bulletin 2018/28**

(51) Int Cl.:
*H04N 7/167* (2011.01)     *G11B 20/00* (2006.01)

(21) Application number: **01201136.7**

(22) Date of filing: **23.03.2001**

(54) **Method and system for secure data storage**

Verfahren und System zur sicheren Datenspeicherung

Procédé et système de sécurisation de stockage

(84) Designated Contracting States:
**AT BE CH CY DE DK ES FI FR GB GR IE IT LI LU MC NL PT SE TR**

(43) Date of publication of application:
**25.09.2002 Bulletin 2002/39**

(73) Proprietor: **Nederlandse Organisatie voor toegepast-natuurwetenschappelijk onderzoek TNO 2595 DA 's-Gravenhage (NL)**

(72) Inventors:
• **Roelofsen, Gerrit**
  **2331 AH  Leiden (NL)**
• **Gelbord, Boaz Simon**
  **1016 VS  Amsterdam (NL)**

(74) Representative: **V.O.**
  **P.O. Box 87930**
  **2508 DH Den Haag (NL)**

(56) References cited:
WO-A1-98/35472     GB-A- 2 343 049
US-A- 5 956 400     US-A- 6 011 901

• **PATENT ABSTRACTS OF JAPAN vol. 2000, no. 10, 17 November 2000 (2000-11-17) & JP 2000 195168 A (LG ELECTRONICS INC), 14 July 2000 (2000-07-14)**
• **SCHNEIER B ED - SCHNEIER B: "Applied cryptography, second edition: protocols, algorithms, and source code in C", 1 January 1996 (1996-01-01), APPLIED CRYPTOGRAPHY : PROTOCOLS, ALGORITHMS, AND SOURCE CODE IN C, NEW YORK, NY : JOHN WILEY & SONS, US, PAGE(S) 28 - 29,169, XP002985121, ISBN: 978-0-471-12845-8**
• **SCHNEIER ET AL: "Applied Cryptography, Protocols, Algorithms, and Source code in C", APPLIED CRYPTOGRAPHY, 1 January 1994 (1994-01-01), pages 1-16,70/71, XP002111346,**

EP 1 244 307 B1

**Description**

BACKGROUND

The invention relates to a method and system for secure storage and retrieval of a data string generated by a data source, like a closed circuit television (CCTV) camera.

The growing societal demand for privacy is on a collision course with the increased need for digital surveillance arising from growing crime and civil disputes. There is a need to avoid or soften this collision by providing a camera which can record events while still preserving the privacy of those being filmed.

A simple example illustrates the difficulties with camera surveillance. Suppose that the police wishes to install a camera in a main city square that has been experiencing rising crime. There will be strong opposition to privacy advocates to such a proposal since it can be seen as encroaching on the right of law abiding citizens to conduct their affairs without being watched. An answer to this situation could be a camera operating in such a way that the recorded picture can only be viewed if a number of different parties consent to do so. Those parties could include the police, a privacy advocacy group, and the municipality.

US 6,011,901 describes a security camera system wherein image can be stored in fixed storage and removable storage. The images are compressed before storage.

US 5,956,400 discloses a method of providing privacy protection for a database. The database is fragmented, by storing the information from different fields of a record in different databases. A trusted third party is used to resolve queries that require combination of data from the different databases.

WO98/35472 discloses archive/backup support with privacy assurances by encrypting data. The encrypted data and the corresponding decryption key are stored separately.

THE INVENTION

The invention is defined by the appended independent claims. Firstly, it should be noted that this invention is not only applicable for surveillance camera's, but could also be used for other applications, e.g. document viewing etc. So, in general, the invention relates to a method and system for secure and accountable storage and retrieval of a data string generated by a data source.

One object of the invention is to have a camera or other data source, which records data (i.e. an image) which is sent in decomposed pieces to a number of different parties. Each piece by itself is not understandable without a key, meaningless or completely worthless when trying to reconstruct the image. However all the pieces, after re-composition, provide the full image.

According to the present invention the following steps can be executed:

a. one or more independent data strings are generated (for instance from a random or an encryption data source), resulting in one or more output strings;

b. optionally said one or more output strings are combined (for example by summing bit-by-bit modulo two) to each other and to said original data string generated by the data source, resulting in at least one additional output string;

c. at least one or two or more, preferable all, of said output strings ("decomposition strings") are stored separately, optionally in separate storage locations;

d. for retrieval of a replica of said original data string, the separately stored output strings are retrieved and combined to each other, resulting in said replica. Preferably, the original data string is watermarked by means of insertion of an identifying watermark string into said data string. Moreover, said output strings ("decomposition strings") are also watermarked by inserting watermark strings into said output strings. In step c. said output strings may be watermarked by assigning a download watermark string to each output string, different from the watermark string added to the original data string. In step d. said output strings may be watermarked by upload watermark strings, different from said download watermark strings. Each of said watermark strings may comprise an identifier referring to said data source and may include comprise a time stamp referring to the generation or release of said data source, or may include comprise one or more identifiers referring to the store locations. Preferably, the output strings are transmitted to and from said store locations in an encrypted form, using an encryption key. The encryption key may be a function of an identifier referring to the original data source, to a time stamp referring to the generation time or release time of the data source. Said key may also be a function of respective identifiers referring to said store locations.

The separately stored data strings preferably have different accession rights for retrieval, the accession right being assigned to different (groups of) persons.

So, according to an object of the invention, the original image -in general, the data string or file- is decomposed into two or more separate, preferably watermarked and encrypted output strings (files). It is difficult or in cases impossible to reconstruct the original image from any subset of the different output strings. A replica of the original can be afforded by re-composing all the individual de-composed output files.

In a variant of the invention it is possible to design the decomposing function (steps a. to c.) in such a way that the original data string is split in say n output strings, but that less than n output strings are needed to re-compose the original data string. In other words a number of redundant decomposing output strings may be generated.

Preferably one of the output strings is stored in the direct neighbourhood (the same location) of the data source (the camera). This provides the advantage that in the case that all (minus one) output strings which are stored at a certain distance and therefore have to be transported over that distance, could be intercepted during that data transport. While, in this preferred option, one of the output strings is staying within the camera's location and thus cannot be attacked during data transport.

The invention presents a number of technical advantages. Foremost is the fact that the decomposing scheme involved implies that no single party on its own provably has any information regarding the recorded image. It is this fact that gives the recorded persons the security and guarantee for privacy that the recording can only be viewed when there is co-operation amongst a number of parties, each having accession rights to only one de-composed file.

IMPLEMENTATION

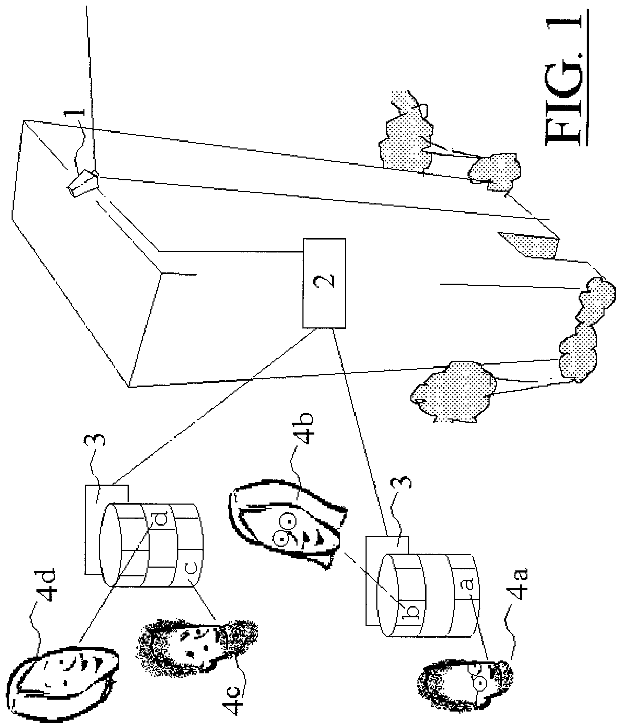

Figure 1 illustrates an embodiment of the system according to the invention. The system comprises a data source, viz. a camera 1, connected to a processor 2 which executes the method according the invention, viz. de-compiles the files generated by the camera 1 and downloads them to a number of (separate) storage locations 3a...d. Those storage locations 3 are accessible by different users 4a...d, each of them having accession rights for only one storage location, by means of an individual identifier/password combination, stored in the storage system 3. Note: the storage locations may be physically located within one storage system or within physically separated storage systems. In an embodiment of the invention one person or organisation has the rights to access to one de-compiled file and upload it to processor 2 when desired. In that way re-compilation of (a replica of) the original (image) file only can be achieved after that several persons or organisations have accessed their own de-compiled files and uploaded them to the processor 2. In processor 2 uploaded files are combined the one another, resulting in a re-compiled replica of the original. Both, downloading and uploading of the de-compiled files is executed after encryption of those files. Besides, the files contain a digital watermark.

Hereafter the following variables will be used:

t Number of parties
$P\_1,...,P\_t$ Parties receiving the shared images
C Camera C
$K\_1,...,K\_t$ Secret keys of the parties 1 to t
$T\_C$ Time interval at camera C
$DK\_i$ Derived key for party i
$D\_{T\_C}$ Complete image for camera C at time T
$D\_{{T\_C}\_i}$ Un-watermarked shares, i from 1 to t
$M\_{{T\_C}\_i}$ Watermarked shares, i from 1 to t

Let us denote the various parties whose consent will be needed to recreate the image as $P\_1, P\_2, ...,P\_t$. We denote a particular camera 1 by C. The values that follow (such as keys and so forth) will all be taken to be indexed with respect to the camera C. This will be denoted by the subscript C.

When a particular location is to have a camera 1 C installed, the camera 1 is provided, in a tamper-resistant module, the keys $K\_1, K\_2,...,K\_t$ of the parties $P\_1,...,P\_t$ respectively. This can be done using PKI for example, or otherwise can be done at the manufacturing stage itself.

The camera will have a defined time interval that contains a predetermined number of data frames (or alternately a predetermined elapsed time). Let the time on the camera be defined as $T\_C$. Thus in this embodiment $T\_C=0$ for the first frame, $T\_C=1$ for the second, and so forth.

For each value of i, $1<=i<=t$, the camera C (in fact processor 2) shall calculate the following key for the present value of $T\_C$:

```
DK_i=Derived Key(P_i, T_C, C, (optionally-names of the
parties P_1,....,P_t))  (*)
```

This derived key can be obtained in numerous ways. In this particular embodiment a one-way hash function like SHA-1 will be used.

As well, each of the parties P_1,...,P_t shall calculate (*) for its own value of i.

The camera 1 shall then transmit the current digital image, denoted D_{T_C} as follows. The image D_{T_C} will first be assigned a digital watermark by the camera, to obtain a new D_{T_C} containing a general watermark. The image D_{T_C} shall be divided into a number of t equal "portions", in the following manner. Regarding each D_{T_C} as a matrix over some ring (which depends on the resolution of the picture), the camera 1 shall assign arbitrary matrices D_{{T_C},i}, for i=1 to t-1, in an independent, arbitrary (random) manner. Then the last matrix D_{{T_C},t} shall be assigned in such a way such that:

$$D\_\{\{T\_C\}\_1\}+D\_\{\{T\_C\}\_2\}+...+D\_\{\{T\_C\}\_t\}\} \; = \; D\_\{T\_C\}$$

Now the camera 1 shall calculate a new image M_{{T_C}_i} based on D_{{T_C}_i}, where M_{{T_C}_i} is equal to

D_{{T_C}_i}, with a download digital watermark that contains the identifier of C, T_C, i, and the current date. As well, the values of the other parties (those values in 1,...,t not equal to i) may optionally be placed on the digital watermark.

The image (ie. matrix) M_{{T_C}_i} is then send to the party i, encrypted with K_i. In one embodiment, a hashed value of M_{{T_C}_i} is sent to all the parties 1 through t.

Now suppose one of the parties wants to reconstruct (re-compile) the image. Since all the parties have a completely random image, none will be able to reconstruct the image without the co-operation of the other parties. However, if the parties operate together, together they will be able to reconstruct the image by simply summing up (combining) the constituent parts. In this embodiment an uploading watermark is added to each share M_{T_C}_i before the re-composition begins. Each party can then verify if the share it is receiving from the other party is valid.

Below the method according to the invention will be illustrated by a simplified example. In this example watermarking and encryption of the strings are not shown. Starting from an original data string produced by the camera: 01111000011110111111100011001111110000001101101110.., three independent random output strings are generated.

string 1:
11010010001010111100011011101110000100010101100011..
string 2:
11000001011100011011110110101000010100110100011001..
string 3:
01110100111000011110010011011111001000110101000000..

According to the invention those three output strings and the original data string are combined by calculating for each bit position the sum modulo 2 (indicated as "[+]") of the bit values of string 1, string 2 and string 3. E.g. for bit position 1 (from the left) this is 0[+]1[+]1[+]0 = 0; for bit position 2 this is 1[+]1[+]1[+]1 = 0; for bit position 3 this is 1[+]0[+]0[+]1 = 0; ; for bit position 4 this is 1[+]1[+]0[+]1 = 1; etc. This results in a forth string as shown below: string 4: 00011111110000000110001111001100001001101101110100..

All (four) output strings (de-composed camera strings) are stored separately.

For retrieval of a (re-composed) replica of the camera string from the separately stored output strings, those strings are combined by calculating for each bit position the sum modulo 2 ("[+]") of the four bit values of the individual output strings,

string 1: 11010010001010111100011011101110000100010101011..
string 2: 11000001011100011011110110101000010100110100010..
string 3: 01110100111000011110010011011111001000110101..
string 4: 00011111110000000110001111001100001001101101..

resulting in the replica string:
01111000011110111111100011001111110000000011011.. which is identical to the original camera string. Expanding this example with watermarking the camera string as well as the individual decomposition strings, results into the following.

Again, the camera string is:
0111100001111011111111000110011111000000..

Watermarking with a (in this case very simple 6-bits watermark header string "000000") results into:
0000000111100011110111111110001100111110000000..

Firstly, the processor 2 generates three random output strings:

string 1: 11010010001010111100011011101110000100010010110..
string 2: 01011100011011110110101000010100110100011100101..
string 3: 00011110010011101111100100011010100000101000110..

After that processor 2 calculates output string 4 by summing modulo 2 bit-by-bit the watermarked camera string and the random output strings 1 to 3, resulting into: string 4: 1001000111101011101110100001000111011101010101.. Next, all output strings are provided with individual (download) watermark headers "000001", "000010", "000011" and "000100" respectively:

1: 000001 11010010001010111100011011101110000100010010110..
2: 000010 01011100011011110110101000010100110100011100101..
3: 000011 00011110010011101111100100011010100000101000110..
4: 000100 10010001111010111011101000010001110111101010101..

These output strings may be encrypted and transmitted to separate storage locations 3, where they are stored, either in encrypted form or in original (decrypted) form.

In the retrieving and re-composition stage of the process, all individual strings 1 to 4 are transmitted to the central processor 2, where the individual watermarks will be checked on validity. If correct, the individual watermarks are deleted, resulting into the strings 1-4:

string 1: 11010010001010111100011011101110000100010010110..
string 2: 01011100011011110110101000010100110100011100101..
string 3: 00011110010011101111100100011010100000101000110..
string 4: 10010001111010111011101000010001110111101010101..

which, bit-by-bit, are summed modulo 2, resulting into a replica of the original, watermarked camera string:
00000001111000011110111111110001100111110000000..

The camera watermark can be checked then and, if correct, the watermark can be deleted, resulting into a replica of the original camera string:
01111000011110111111110001100111110000000..

It is noted that it may be advantageous in view of security to generate more output strings then actually will be used for re-composition. A method hereto, which is not part of the invention, is to generate a number of redundant output strings and to label those strings, within those strings themselves or within the processor 2, by an redundancy/relevance code. Only strings having such code indicating that that string is essential for recovering the original string, will be processed in processor 2 in the recomposition process as described above. For instance, in the above example not three but six decomposition strings are generated, but string four is calculated only using strings one to three (equal to the above example); strings five to seven only are redundant "dummies". In this example the redundancy/relevance code is formed by the first watermark bit. Another, may be better, option is to register, in the processor 2, which strings are relevant for recovering a replica of the original string, and which are not.

1: 00000111010010001010111100011011101110000100010101100..
2: 00001001011100011011110110101000010100110100011001011..
3: 00011100011110010011101111100100011010100000101001101..
4: 00010001011001101110100001111101010101110010111010101..
5: 10010111000001001011011000000100111111001010001011011110..
6: 10011011010001011100011010001011111111010101101100011000..
7: 10011111011000000011011000010111000101000111000101100..

Instead of producing a number of redundant random strings (5-7), the option chosen in this invention is to calculate one or more extra output strings from one or more random strings, in the same way as string 4 was calculated form strings 1 to 3. For instance, first a series of four random string are generated, followed by a fifth string, which is calculated by summing modulo two the bits of the original string and those of random strings one and three (shorter: string 5 results from strings 1 and 3). Further, a sixth string is made, by summing modulo two the bits of (again) the original string and the random strings (an arbitrary choice) one, three and four (in short: string 6 results from strings 1, 3 and 4). In this way another redundancy is created, viz. by the string couples 1, 3 and 5 resp. 1, 2, 4 and 6. An replica of the original now can be re-composed from either the first couple of strings 1, 3 and 5, or from the second couple of strings 1, 2, 4 and 6, in both case by summing modulo two the respective bits of the strings of the first couple or by summing modulo two the respective bits of all strings of the second couple. Processor 2 needs to register which strings belong to respective couples and are able to reproduce together a replica of the original. Finally, it may be advantageous to make use of different watermarks for downloading and uploading of the output strings respectively. In that case, on downloading the strings to the storage location 3, the processor 2 may assign download watermarks to the output strings, while the storage means 3 may assign, on uploading from the storage location to the processor 2, upload watermarks. The same may apply for the original string and its recomposed replica.

**Claims**

1. Method for secure storage and retrieval of an original data string generated by a data source, the method comprising the following steps:

   - generating a plurality of independent first output strings;
   - selecting a plurality of sets of first output strings,
   - assigning a further output string for each set of first output strings, the further output string being assigned in such a way that a bit-by-bit modulo two sum of the further output string and the first output strings in the set equals said original data string or, when the original data string is an image matrix and the first output strings are matrices, the further output string being a matrix assigned in such a way that a sum of the matrices that are the first output strings of the set and the matrix that is the further output string equals a matrix that is the original data string;
   - registering the sets of first output strings and their assigned further output strings;
   - storing the output strings in a set separately such that mutually different access rights are needed for retrieval of the output strings and
   - for retrieval of a replica of said original data string generated by the data source, the separately stored first output strings of either of the sets and the further output string assigned to that set are retrieved and summed to each other, resulting in said replica.

2. Method according to claim 1, **CHARACTERIZED IN that**, preceding to assigning step, said original data string generated by the data source is watermarked by inserting a watermark string into said original data string.

3. Method according to any one of claims 1-2, **CHARACTERIZED IN that**, preceding to preceding to said storing step, said output strings are watermarked by inserting a download watermark string into each output string.

4. Method according to any one of claims 1-3 **CHARACTERIZED IN that**, preceding to retrieving the output strings and summing the output strings to each other resulting in said replica, said output strings are watermarked by inserting an upload watermark string into each output string.

5. Method according to any one of claims 2-4, **CHARACTERIZED IN that** said watermark strings comprise an identifier referring to said data source.

6. Method according to claim 5, **CHARACTERIZED IN that** said data source identifier comprises a time stamp referring to the generation or release of said data source.

7. Method according to any one of claims 2-4, **CHARACTERIZED IN that** said watermark strings comprise identifiers referring to said store locations.

8. Method according to claim 1, **CHARACTERIZED IN that** said output strings are transmitted to and from said store locations in an encrypted form, using an encryption key.

9. Method according to claim 8, **CHARACTERIZED IN that** said encryption key is a function of an identifier referring to said data source.

10. Method according to claim 9, **CHARACTERIZED IN that** said data source identifier comprises a time stamp referring to the generation or release of said data source.

11. Method according to claim 8, **CHARACTERIZED IN that** said key is a function of identifiers referring to said store locations.

12. Method according to claim 1, **CHARACTERIZED IN that** one of the output strings is stored in the same location as the information source.

13. Method according to claim 1, **CHARACTERIZED IN that** said sets are registered by assigning a code to the respective output strings.

14. Method according to claim 1, **CHARACTERIZED IN that** said sets are registered outside said output strings.

15. Method according to claim 1, **CHARACTERIZED IN that** said sets are registered inside said output strings.

16. System for secure storage and retrieval of an original data string generated by a data source, the system comprising a processor (2), the processor comprises

- means for generating a plurality of output strings, said means for generating being configured to
- generate a plurality of independent first output strings;
- selecting a plurality of sets of the independent first output strings,
- assign a further output string for each set of first output strings, the further output string being assigned in such a way that a bit-by-bit modulo two sum of the further output string and the first output strings in the set equals said original data string or, when the original data string is an image matrix and the first output strings are matrices, the further output string being a matrix assigned in such a way that a sum of the matrices that are the first output strings of the set and the matrix that is the further output string equals a matrix that is the original data string;
- means to register the sets of first output strings and their assigned further output strings;
- means (3) for storing the output strings in a set separately;
- retrieving means (2,3) for retrieval of a replica of said original data string generated by the data source by retrieving the separately stored first output strings of either of the sets and the further output string assigned to that set are retrieved and summed to each other; and
- means for maintaining different access rights to said separately stored output strings.

17. System according to claim 16, **CHARACTERIZED IN that** said data source is a TV camera (1).

18. System according to claim 16, **CHARACTERIZED IN that** said processor (2) comprises means for watermarking said original data string generated by the data source by assigning an identifying watermark string to said original data string.

19. System according to claim 16, **CHARACTERIZED IN that** said processor (2) comprises means for watermarking said output strings by assigning identifying watermark strings to said output strings.

20. System according to claim 16, **CHARACTERIZED IN that** said processor (2) comprises means for encryption said output strings transmitted to said store locations and for decryption said encrypted output strings transmitted from said store locations.

21. System according to claim 16, **CHARACTERIZED IN that** said storage means (3) comprise means for watermarking said output strings by assigning identifying watermark strings to said output strings.

**Patentansprüche**

1. Verfahren zur sicheren Speicherung und Wiedergewinnung einer originalen Datenkette, erzeugt von einer Datenquelle, das Verfahren umfassend folgende Schritte:

- Erzeugen einer Vielzahl von unabhängigen ersten Ausgangsketten;
- Auswählen einer Vielzahl von Sätzen erster Ausgangsketten,
- Zuordnen einer weiteren Ausgangskette für jeden Satz erster Ausgangsketten, welche weitere Ausgangskette so zugeordnet ist, dass eine bitweise Modulo-Zwei-Summe der weiteren Ausgangskette und die ersten Ausgangsketten in dem Satz gleich der originalen Datenkette ist oder, wenn die originale Datenkette eine Bildmatrix ist und die ersten Ausgangsketten Matrizen sind, die weitere Ausgangskette eine derart zugeordnete Matrix ist, dass eine Summe der Matrizen, welche die ersten Ausgangsketten des Satzes sind, und die Matrix, welche die weitere Ausgangskette ist, gleich einer Matrix ist, die die originale Datenkette ist;

- Registrieren der Sätze erster Ausgangsketten und deren zugeordneter weiterer Ausgangsketten;

- Speichern der Ausgangsketten in einem Satz derart getrennt, dass voneinander verschiedene Zugangsrechte zur Wiedergewinnung der Ausgangsketten benötigt werden, wobei

- zur Wiedergewinnung einer Nachbildung der von der Datenquelle erzeugten originalen Datenkette die getrennt gespeicherten ersten Ausgangsketten von einem der Sätze und die weitere Ausgangskette, die diesem Satz zugeordnet ist, wiedergewonnen und miteinander summiert werden, was in der Nachbildung resultiert.

2. Verfahren nach Anspruch 1, **DADURCH GEKENNZEICHNET, dass** vor dem Zuordnungsschritt die von der Datenquelle erzeugte originale Datenkette durch Einfügen einer Wasserzeichenkette in die originale Datenkette mit einem Wasserzeichen versehen wird.

3. Verfahren nach einem der Ansprüche 1-2, **DADURCH GEKENNZEICHNET, dass** vor dem Speicherungsschritt die Ausgangsketten mit einem Wasserzeichen versehen werden, indem in jede Ausgangskette ein Download-Wasserzeichen eingefügt wird.

4. Verfahren nach einem der Ansprüche 1-3, **DADURCH GEKENNZEICHNET, dass** vor dem Wiedergewinnen der Ausgangsketten und Summieren der Ausgangsketten miteinander, um die Nachbildung zu ergeben, die Ausgangsketten mit einem Wasserzeichen versehen werden, indem eine Upload-Wasserzeichenkette in jede Ausgangskette eingefügt wird.

5. Verfahren nach einem der Ansprüche 2-4, **DADURCH GEKENNZEICHNET, dass** die Wasserzeichenketten einen Identifikator umfassen, der auf die Datenquelle verweist.

6. Verfahren nach Anspruch 5, **DADURCH GEKENNZEICHNET, dass** der Datenquellen-Identifikator einen Zeitstempel umfasst, der auf die Erzeugung oder Freigabe der Datenquelle verweist.

7. Verfahren nach einem der Ansprüche 2-4, **DADURCH GEKENNZEICHNET, dass** die Wasserzeichenketten Identifikatoren Umfassen, die auf die Speicherorte verweisen.

8. Verfahren nach Anspruch 1, **DADURCH GEKENNZEICHNET, dass** die Ausgangsketten in einer verschlüsselten Form unter Verwendung eines Verschlüsselungsschlüssels zu und von den Speicherorten gesendet werden.

9. Verfahren nach Anspruch 8, **DADURCH GEKENNZEICHNET, dass** der Verschlüsselungsschlüssel von einem Identifikator abhängt, der auf die Datenquelle verweist.

10. Verfahren nach Anspruch 9, **DADURCH GEKENNZEICHNET, dass** der Datenquellen-Identifikator einen Zeitstempel umfasst, der auf die Erzeugung oder Freigabe der Datenquelle verweist.

11. Verfahren nach Anspruch 8, **DADURCH GEKENNZEICHNET, dass** der Schlüssel von Identifikatoren abhängt, die auf die Speicherorte verweisen.

12. Verfahren nach Anspruch 1, **DADURCH GEKENNZEICHNET, dass** eine der Ausgangsketten in demselben Speicherort wie die Informationsquelle gespeichert wird.

13. Verfahren nach Anspruch 1, **DADURCH GEKENNZEICHNET, dass** die Sätze durch Zuordnen eines Codes zu den entsprechenden Ausgangsketten registriert werden.

14. Verfahren nach Anspruch 1, **DADURCH GEKENNZEICHNET, dass** die Sätze außerhalb der Ausgangsketten registriert werden.

15. Verfahren nach Anspruch 1, **DADURCH GEKENNZEICHNET, dass** die Sätze innerhalb der Ausgangsketten registriert werden.

16. System zur sicheren Speicherung und Wiedergewinnung einer originalen Datenkette, erzeugt von einer Datenquelle, das System umfassend einen Prozessor (2), der Prozessor umfassend

- Mittel zum Erzeugen einer Vielzahl von Ausgangsketten, welche Mittel zum Erzeugen konfiguriert sind zum

- Erzeugen einer Vielzahl von unabhängigen ersten Ausgangsketten;

- Auswählen einer Vielzahl von Sätzen der unabhängigen ersten Ausgangsketten,

- Zuordnen einer weiteren Ausgangskette für jeden Satz erster Ausgangsketten, welche weitere Ausgangskette so zugeordnet wird, dass eine bitweise Modulo-Zwei-Summe der weiteren Ausgangskette und die ersten Ausgangsketten in dem Satz gleich der originalen Datenkette ist oder, wenn die originale Datenkette eine Bildmatrix ist und die ersten Ausgangsketten Matrizen sind, die weitere Ausgangskette eine so zugeordnete Matrix ist, dass eine Summe der Matrizen, welche die ersten Ausgangsketten des Satzes sind, und die Matrix, welche die weitere Ausgangskette ist, gleich einer Matrix ist, welche die originale Datenkette ist;

- Mittel zum Registrieren der Sätze erster Ausgangsketten und deren zugeordneter weiterer Ausgangsstrings;

- Mittel (3) zum getrennten Speichern der Ausgangsketten in einem Set;

- Wiedergewinnungsmittel (2,3) zum Wiedergewinnen einer Nachbildung der von der Datenquelle erzeugten originalen Datenkette, durch Wiedergewinnen der getrennt gespeicherten ersten Ausgangsketten von jedem der Sätze, und der diesem Satz zugeordneten weiteren Ausgangsketten und deren Summieren miteinander; und

- Mittel zum Aufrechterhalten verschiedener Zugangsrechte zu den getrennt gespeicherten Ausgangsketten.

**17.** System nach Anspruch 16, **DADURCH GEKENNZEICHNET, dass** die Datenquelle eine Fernsehkamera (1) ist.

**18.** System nach Anspruch 16, **DADURCH GEKENNZEICHNET, dass** der Prozessor (2) Mittel umfasst, um die von der Datenquelle erzeugte originale Datenkette durch Zuordnen einer identifizierenden Wasserzeichenkette zu der originalen Datenkette mit einem Wasserzeichen zu versehen.

**19.** System nach Anspruch 16, **DADURCH GEKENNZEICHNET, dass** der Prozessor (2) Mittel umfasst, um die Ausgangsketten durch Zuordnen identifizierender Wasserzeichenketten mit Wasserzeichen zu versehen.

**20.** System nach Anspruch 16, **DADURCH GEKENNZEICHNET, dass** der Prozessor (2) Mittel umfasst, um die an die Speicherorte gesendeten Ausgangsketten zu verschlüsseln und um die von den Speicherorten gesendeten Ausgangsketten zu entschlüsseln.

**21.** System nach Anspruch 16, **DADURCH GEKENNZEICHNET, dass** die Speichermittel (3) Mittel umfassen, um die Ausgangsketten durch Zuordnen identifizierender Wasserzeichenketten zu den Ausgangsketten mit Wasserzeichen zu versehen.

## Revendications

**1.** Méthode de stockage et de récupération sécurisés d'une chaîne de données d'origine générée par une source de données, la méthode comprenant les étapes suivantes consistant à :

- générer une pluralité de premières chaînes de sortie indépendantes ;

- sélectionner une pluralité d'ensembles de premières chaînes de sortie,

- affecter une chaîne de sortie supplémentaire pour chaque ensemble de premières chaînes de sortie, la chaîne de sortie supplémentaire étant affectée de telle sorte qu'une somme modulo deux bit-par-bit de la chaîne de sortie supplémentaire et des premières chaînes de sortie dans l'ensemble est égale à ladite chaîne de données d'origine ou, lorsque la chaîne de données d'origine est une matrice image et que les premières chaînes de sortie sont des matrices, la chaîne de sortie supplémentaire est une matrice affectée de telle sorte qu'une somme des matrices qui sont les premières chaînes de sortie de l'ensemble et de la matrice qui est la chaîne de sortie supplémentaire est égale à une matrice qui est la chaîne de données d'origine ;

- enregistrer les ensembles de premières chaînes de sortie et leurs chaînes de sortie supplémentaires affectées ;

- stocker séparément les chaînes de sortie dans un ensemble de sorte que des droits d'accès mutuellement différents sont nécessaires pour la récupération des chaînes de sortie et

- pour récupérer une réplique de ladite chaîne de données d'origine générée par la source de données, les premières chaînes de sortie stockées séparément de l'un des ensembles et la chaîne de sortie supplémentaire affectée à cet ensemble sont récupérées et sommées les unes aux autres, ayant pour résultat ladite réplique.

**2.** Méthode selon la revendication 1, **caractérisée en ce que**, avant l'étape d'affectation, ladite chaîne de données d'origine générée par la source de données est filigranée en insérant une chaîne de filigrane dans ladite chaîne de données d'origine.

**3.** Méthode selon l'une quelconque des revendications 1-2, **caractérisée en ce que**, avant ladite étape de stockage, lesdites chaînes de sortie sont filigranées en insérant une chaîne de filigrane téléchargée de manière descendante dans chaque chaîne de sortie.

**4.** Méthode selon l'une quelconque des revendications 1-3, **caractérisée en ce que**, avant de récupérer les chaînes de sortie et de sommer les chaînes de sortie les unes aux autres ayant pour résultat ladite réplique, lesdites chaînes de sortie sont filigranées en insérant une chaîne de filigrane téléchargée de manière ascendante dans chaque chaîne de sortie.

**5.** Méthode selon l'une quelconque des revendications 2-4, **caractérisée en ce que** lesdites chaînes de filigrane comprennent un identifiant faisant référence à ladite source de données.

**6.** Méthode selon la revendication 5, **caractérisée en ce que** ledit identifiant de source de données comprend un horodatage faisant référence à la génération ou au déclenchement de ladite source de données.

**7.** Méthode selon l'une quelconque des revendications 2-4, **caractérisée en ce que** lesdites chaînes de filigrane comprennent des identifiants faisant référence auxdits emplacements de stockage.

**8.** Méthode selon la revendication 1, **caractérisée en ce que** lesdites chaînes de sortie sont transmises vers et depuis lesdits emplacements de stockage sous une forme cryptée, en utilisant une clé de cryptage.

**9.** Méthode selon la revendication 8, **caractérisée en ce que** ladite clé de cryptage est une fonction d'un identifiant faisant référence à ladite source de données.

**10.** Méthode selon la revendication 9, **caractérisée** en ce ledit identifiant de source de données comprend un horodatage faisant référence à la génération ou au déclenchement de ladite source de données.

**11.** Méthode selon la revendication 8, **caractérisée** en ce ladite clé est une fonction d'identifiants faisant référence auxdits emplacements de stockage.

**12.** Méthode selon la revendication 1, **caractérisée en ce que** l'une des chaînes de sortie est stockée au même emplacement que la source d'informations.

**13.** Méthode selon la revendication 1, **caractérisée en ce que** lesdits ensembles sont enregistrés en affectant un code aux chaînes de sortie respectives.

**14.** Méthode selon la revendication 1, **caractérisée en ce que** lesdits ensembles sont enregistrés à l'extérieur desdites chaînes de sortie.

**15.** Méthode selon la revendication 1, **caractérisée en ce que** lesdits ensembles sont enregistrés à l'intérieur desdites chaînes de sortie.

**16.** Système de stockage et de récupération sécurisés d'une chaîne de données d'origine générée par une source de données, le système comprenant un processeur (2), le processeur comprend

- des moyens pour générer une pluralité de chaînes de sortie, lesdits moyens de génération étant configurés pour
- générer une pluralité de premières chaînes de sortie indépendantes ;
- sélectionner une pluralité d'ensembles des premières chaînes de sortie indépendantes,
- affecter une chaîne de sortie supplémentaire pour chaque ensemble de premières chaînes de sortie, la chaîne de sortie supplémentaire étant affectée de telle sorte qu'une somme modulo deux bit-par-bit de la chaîne de sortie supplémentaire et des premières chaînes de sortie dans l'ensemble est égale à ladite chaîne de données d'origine ou, lorsque la chaîne de données d'origine est une matrice image et que les premières chaînes de sortie sont des matrices, la chaîne de sortie supplémentaire est une matrice affectée de telle sorte qu'une somme des matrices qui sont les premières chaînes de sortie de l'ensemble et de la matrice qui est la chaîne de sortie supplémentaire est égale à une matrice qui est la chaîne de données d'origine ;
- des moyens pour enregistrer les ensembles de premières chaînes de sortie et leurs chaînes de sortie supplémentaires affectées ;
- des moyens (3) pour stocker séparément les chaînes de sortie dans un ensemble ;

- des moyens de récupération (2,3) pour récupérer une réplique de ladite chaîne de données d'origine générée par la source de données en récupérant les premières chaînes de sortie stockées séparément de l'un des ensembles et la chaîne de sortie supplémentaire affectée à cet ensemble qui sont récupérées et sommées les unes aux autres ; et

- des moyens pour maintenir différents droits d'accès auxdites chaînes de sortie stockées séparément.

**17.** Système selon la revendication 16, caractérisé en ce ladite source de données est une caméra de télévision (1).

**18.** Système selon la revendication 16, **caractérisé en ce que** ledit processeur (2) comprend des moyens pour filigraner ladite chaîne de données d'origine générée par la source de données en affectant une chaîne de filigrane d'identification à ladite chaîne de données d'origine.

**19.** Système selon la revendication 16, **caractérisé en ce que** ledit processeur (2) comprend des moyens pour filigraner lesdites chaînes de sortie en affectant des chaînes de filigrane d'identification auxdites chaînes de sortie.

**20.** Système selon la revendication 16, **caractérisé en ce que** ledit processeur (2) comprend des moyens pour crypter lesdites chaînes de sortie transmises auxdits emplacements de stockage et pour décrypter lesdites chaînes de sortie cryptées transmises à partir desdits emplacements de stockage.

**21.** Système selon la revendication 16, **caractérisé en ce que** lesdits moyens de stockage (3) comprennent des moyens pour filigraner lesdites chaînes de sortie en affectant des chaînes de filigrane d'identification auxdites chaînes de sortie.

FIG. 1

**EP 1 244 307 B1**

## REFERENCES CITED IN THE DESCRIPTION

**Patent documents cited in the description**

- US 6011901 A
- US 5956400 A
- WO 9835472 A